# EUROPEAN PATENT APPLICATION

(11) **EP 4 254 880 A1**
(43) Date of publication of application: **04.10.2023**
(21) Application number: 23162867.8
(22) Date of filing: 20.03.2023
(51) Int. Cl.: H04L 12/40, H04L 12/46, H04L 12/66

(54) **HARDWARE ETHERNET HEADER VERIFICATION**

(30) Priority: 01.04.2022 US 202217711871
(71) Applicant: NXP B.V., 5656 AG Eindhoven (NL)
(72) Inventor: Panell, Donald Robert, 5656 AG Eindhoven (NL)
(74) Representative: Schmütz, Christian Klaus Johannes

(57) **Abstract**

Various embodiments relate to an interface system for interfacing between a first network and a second network, including: a hardware implemented message identifier to actions database configured to store action bits and store information and actions regarding building a frame in the second protocol; a hardware implemented frame builder configured to produce a second message in the second protocol including the first message based upon the information and actions from the message identifier to actions database; and a hardware implemented parser configured to: receive a third message from the second network in the second protocol; extract the message identifier from a fourth message in the first protocol included in the third message from the second network; receive action bits, information, and actions from the message identifier to actions database associated with the message identifier from the fourth message; verify the validity of the fourth message.

## Description

### TECHNICAL FIELD

Various exemplary embodiments disclosed herein relate generally to hardware Ethernet header verification.

### BACKGROUND

In vehicle applications controller area networks (CAN) have been used to provide a robust vehicle interface to allow microcontrollers and devices to communicate directly with one another without intervention of a host computer. The local interconnect network (LIN) protocol is an earlier protocol that is also used in vehicle applications. LIN has a lower cost but is slower than CAN. With the use of cameras, LIDAR, RADAR, and other sensors in vehicles to provide various information to the vehicle operator and also for autonomous vehicle operations, the bandwidth needed for these signals is greater than what can be provided by CAN and LIN. As a result, Ethernet networks are being applied in vehicles to meet these bandwidth needs. CAN and LIN systems are still widely used as well in vehicles and they interface with the Ethernet network which may be used to encapsulate and carry CAN or LIN messages in Ethernet frames which are carried on the either network.

### SUMMARY

A summary of various exemplary embodiments is presented below. Some simplifications and omissions may be made in the following summary, which is intended to highlight and introduce some aspects of the various exemplary embodiments, but not to limit the scope of the invention. Detailed descriptions of an exemplary embodiment adequate to allow those of ordinary skill in the art to make and use the inventive concepts will follow in later sections.

Various embodiments relate to an interface system for interfacing between a first network using a first protocol and a second network using a second protocol, including: a hardware implemented message identifier to actions database configured to store action bits and store information and actions regarding building a frame in the second protocol based upon a message identifier in a first message in the first protocol, wherein the message identifier to actions database includes information and actions used to build out a message in second protocol containing the first message and wherein the action bits the action bits indicate what comparisons will be used to verify the validity of a message received from the second network; a hardware implemented frame builder configured to produce a second message in the second protocol including the first message based upon the information and actions from the message identifier to actions database; and a hardware implemented parser configured to: receive a third message from the second network in the second protocol; extract the message identifier from a fourth message in the first protocol included in the third message from the second network; receive action bits, information, and actions from the message identifier to actions database associated with the message identifier from the fourth message; verify the validity of the fourth message based upon the action bits, information, and actions associated with the message identifier from the fourth message; outputting the fourth message to the first network when the fourth message is valid; and dropping the fourth message when the fourth message is invalid.

Various embodiments are described, further including: a first message storage configured to store the first message from the first network and to output the first message to the frame builder; a second message storage configured to store the fourth message output from the parser; a first network interface connected to the first message storage and the second message storage; and a second network interface connected to the frame builder and the parser.

Various embodiments are described, wherein verifying the validity of the fourth message includes comparing various field values in the third message and the fourth message with an associated value in the information received from the message identifier to actions database using hardware logic.

Various embodiments are described, wherein the action bits indicate which of the various comparisons are used to verify the validity of the third message.

Various embodiments are described, wherein the action bits indicate a comparison to determine whether a destination address and source address in the third message match expected values based upon the information received from the message identifier to actions database.

Various embodiments are described, wherein the second network is an Ethernet network and wherein the action bits indicate a comparison to determine whether one of an S-Tag, a C-Tag, or an R-Tag in the third message match expected values based upon the information received from the message identifier to actions database.

Various embodiments are described, wherein the first network is one of a controller area network (CAN) or a local interconnect network (LIN).

Various embodiments are described, wherein the second network is an Ethernet network.

Further various embodiments relate to a method for interfacing between a first network using a first protocol and a second network using a second protocol, including: receiving a first message in the first protocol; extracting a message identifier from the first message; querying a message identifier to actions database using the extracted message identifier from the first message, wherein the message identifier to actions database includes information and actions used to build out a message in second protocol containing the first message; receiving information and actions from message identifier to action database circuit; and producing a second message in the second protocol including the first message based upon the received information and actions; receiving a third message from the second network in the second protocol; extracting the message identifier from a fourth message in the first protocol included in the third message from the second network; querying the message identifier to actions database using the extracted message identifier from the fourth message; receiving action bits, information, and actions from the message identifier to actions database associated with the message identifier from the fourth message, wherein the action bits indicate what comparisons will be used to verify the validity of the fourth message; verifying the validity of the fourth message based upon the action bits, information, and actions associated with the message identifier from the fourth message; outputting the fourth message to the first network when the fourth message is valid; and dropping the fourth message when the fourth message is invalid.

Various embodiments are described, further including: a first message storage circuit configured to store the first message from the first network and to output the first message to the frame builder; and a second message storage circuit configured to store the fourth message output from the parser.

Various embodiments are described, further including: a first network interface circuit connected to the first message storage circuit and the second message storage circuit; and a second network interface circuit connected to the frame builder circuit and the parser circuit.

Various embodiments are described, wherein verifying the validity of the fourth message includes comparing various field values in the third message and the fourth message with an associated value in the information received from the message identifier to actions database circuit.

Various embodiments are described, wherein the action bits indicate which of the various comparisons are used to verify the validity of the third message.

Various embodiments are described, wherein the first network is one of a controller area network (CAN) or a local interconnect network (LIN).

Various embodiments are described, wherein the second network is an Ethernet network.

Further various embodiments relate to an interface circuit for interfacing between a controller area network (CAN) and an Ethernet network, including: a message identifier to actions database circuit configured to: store action bits, wherein the action bits the action bits indicate what comparisons will be used to verify the validity of a message received from the Ethernet network; store information and actions regarding building an Ethernet frame based upon a CAN message identifier in a first CAN message; and output information and actions when receiving the CAN message identifier in the first CAN message; output actions bits, information, and actions when receiving the CAN message identifier for the fourth CAN message; a hardware based frame builder circuit configured to: receive the first CAN message; extract the CAN message identifier from the first CAN message; query the message identifier to actions database using the extracted CAN message identifier from the first CAN message; receive information and actions from message identifier to action database circuit; and produce a second Ethernet message including the first CAN message based upon the received information and actions; and a hardware based parser circuit configured to: receive a third Ethernet message from the Ethernet network; extract the CAN message identifier from a fourth CAN message included in the third Ethernet message from the second network; query the message identifier to actions database using the extracted CAN message identifier from the fourth CAN message; receive action bits, information, and actions from the message identifier to actions database associated with the CAN message identifier from the fourth CAN message; verify the validity of the fourth CAN message based upon the action bits, information, and actions associated with the CAN message identifier from the fourth CAN message; outputting the fourth CAN message to the CAN network when the fourth CAN message is valid; and dropping the fourth CAN message when the fourth CAN message is invalid.

Various embodiments are described, further including: a first message storage circuit configured to store the first CAN message from the CAN network and to output the first CAN message to the frame builder; and a second message storage circuit configured to store the fourth CAN message output from the parser.

Various embodiments are described, further including: a CAN interface circuit connected to the first message storage circuit and the second message storage circuit; and a Ethernet network interface circuit connected to the frame builder circuit and the parser circuit.

Various embodiments are described, wherein verifying the validity of the fourth CAN message includes comparing various field values in the third Ethernet message and the fourth CAN message with an associated value in the information received from the message identifier to actions database circuit.

Various embodiments are described, wherein the action bits indicate which of the various comparisons are used to verify the validity of the third Ethernet message.

Various embodiments are described, wherein interface circuit interfaces between a CAN and Ethernet network in a vehicle.

Further various embodiments relate to a n interface system for interfacing between a network using a protocol and a non-protocol data interface, including: a hardware implemented message identifier to actions database configured to store action bits and store information and actions regarding building a frame in the protocol based upon a destination address associated with first non-protocol data samples received by the non-protocol data interface; a hardware implemented frame builder configured to produce a first message in the protocol including the first non-protocol data samples received by the non-protocol data interface based upon the information and actions from the message identifier to actions database; and a hardware implemented parser configured to: receive a second message including second non-protocol data samples from the network in the protocol; extract the destination address from the second message from the network; receive action bits, information, and actions from the message identifier to actions database associated with the destination address from the second message; verify the validity of the second non-protocol data samples based upon the action bits, information, and actions associated with the designation address from the second message; output the second non-protocol data samples to the non-protocol data interface when the second audio samples are valid; and drop the second non-protocol data samples when the second non-protocol data samples are invalid.

Various embodiments are described, wherein the non-protocol data samples are audio samples.

Various embodiments are described, wherein the non-protocol data samples are general purpose input/output samples.

Further various embodiments relate to an interface circuit for interfacing between a first network using a first protocol and a second network using a second protocol, including: a message identifier to actions database circuit configured to: store action bits; store information and actions regarding building a frame in the second protocol based upon a message identifier in a first message in the first protocol; output information and actions when receiving the message identifier in the first message; and output action bits, information, and actions when receiving the message identifier in the fourth message; a hardware based frame builder circuit configured to: receive the first message; extract the message identifier from the first message; query the message identifier to actions database using the extracted message identifier from the first message; receive information and actions from message identifier to action database circuit; and produce a second message in the second protocol including the first message based upon the received information and actions; and a hardware based parser circuit configured to: receive a third message from the second network in the second protocol; extract the message identifier from a fourth message in the first protocol included in the third message from the second network; query the message identifier to actions database using the extracted message identifier from the fourth message; receive action bits, information, and actions from the message identifier to actions database associated with the message identifier from the fourth message; verify the validity of the fourth message based upon the action bits, information, and actions associated with the message identifier from the fourth message; output the fourth message to the first network when the fourth message is valid; and drop the fourth message when the fourth message is invalid.

### BRIEF DESCRIPTION OF THE DRAWINGS

In order to better understand various exemplary embodiments, reference is made to the accompanying drawings, wherein:
FIG. 1 illustrates an example of an IPv4 UDP Frame with a CAN message where the various headers are illustrated with different shadings along with the embedded CAN message; and
FIG. 2 illustrates an interface system that converts messages between CAN and Ethernet.

To facilitate understanding, identical reference numerals have been used to designate elements having substantially the same or similar structure and/or substantially the same or similar function.

### DETAILED DESCRIPTION

The description and drawings illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art and are to be construed as being without limitation to such specifically recited examples and conditions. Additionally, the term, "or," as used herein, refers to a non-exclusive or (*i.e*., and/or), unless otherwise indicated (*e.g*., "or else" or "or in the alternative"). Also, the various embodiments described herein are not necessarily mutually exclusive, as some embodiments can be combined with one or more other embodiments to form new embodiments.

A system may be used to interface between Ethernet networks and CAN and LIN networks in vehicles. This allows the Ethernet network to be used to carry one or more CAN and/or LIN messages per Ethernet frame throughout the vehicle using the deployed Ethernet network. Embodiments of such an interface system will be described herein that is implemented in hardware in order to be able to meet the speed and latency requirements for the operation of the various vehicle systems. In the embodiments described herein, a CAN to Ethernet interface system will be described, but the interface system described may also be applied to other types of conversions between network protocols.

Ethernet end stations (and sometime Bridges) need to verify the frames they receive prior to acting on the data contained therein. This is because an end station may accidentally receive a frame that was not intended for it as the frame was flooded to all nodes. Flooding can be due to many reasons, some of which are transient errors, but flooding is also a normal function of a Bridge when it does not have a registration for the Destination Address contained in the frame. Shared media, such as 10BASE-T1S multi-drop networks (and all IEEE 802.3 CSMA-CD networks), appears identical to switched network flooding, as each node on the shared media receives all frames that are transmitted by all the other nodes. Destination Address (DA) filtering contained in most Network Interface Controllers (NICs) perform hardware discarding of unicast messages not intended for the local node, but IEEE 802.1 Time Sensitive Networking (TSN) standards quite often uses multicast DAs and if the local filtering table is not big enough, or does not support multicast filtering, some or all of these messages get through. This means that the header fields need to be verified prior to acting on the data. This includes frames with the end station's unicast DA that pass through the NICs DA filtering rules as there are many other fields in the frame that could determine the frame needs to be ignored by the end station.

TSN standards focus on delivering frames in a timely manner with minimal latency for time sensitive operations. For example, in a vehicle, braking and steering commands needs to be delivered with a very low latency. Accordingly, TSN standards may be used by the Ethernet network to allow for these time sensitive control applications that also may include the use of and interfacing with a CAN.

Security mechanisms, like MACsec, do not remove the need for an application to check the headers of each received frame for the expected contents. This is because Bridges and end stations remove the MACsec encryption before the frame is switched or acted on (*i.e.*, before the frame is sent up to the higher layers). So, depending on how many MACsec keys are used in the system (and the fewer keys needed, the easier the system is to configure), and if flooding occurs, an end station may get a frame that was not intended for it. Thus, header verification is still needed.

Accelerating the header verification using a hardware implementation may greatly off-load a software-based approach, but once header verification is available in hardware, a processor may not be needed at all for some applications.

Embodiments of an interface system will be described that are specifically targeted at fixed function applications where a processor is not needed, but header verification is still required. Example fixed function applications include hardware protocol converters that translate Ethernet to CAN, LIN, Audio, general purpose input/output (GPIO) data samples, or other non-protocol data samples. Here non-protocol data samples include any type of data samples that do not follow a specified protocol. Audio data samples are one example, and audio data samples may include, for example, one, two, or more channels of audio. Another, example would be GPIO data samples. GPIO data samples could be any type of data used by devices in a system such as a vehicle. In vehicles, GPIO data may include data associated with controlling a window, steering, braking, lighting, or any other system in the vehicle. These signals may be data signals that do not follow any specific protocol but have meaning to the device associated with the signal. These fixed function devices need to be low cost, so the added complexity of header verification needs to be as low as possible.

It will be shown that the hardware needed to convert CAN to Ethernet (LIN, Audio, or non-protocol data samples). are extensions of this use case) can be re-used in the Ethernet to CAN direction for header verification, with minimal extra cost. Because most devices need to be able to communicate in both directions (*e.g*., CAN to Ethernet and Ethernet to CAN), this meets the goal of supporting header verification with little added hardware cost.

The approach described is unique as it is keyed by the final application data (*e.g*., the CAN's message identifier) as IEEE 1722 supports Ethernet frames containing multiple different independent messages (CAN and/or LIN, *etc*.) in the same frame. The described method may be used on a per CAN message identifier basis so that the same Ethernet frame containing multiple messages may be sent to multiple end stations where each end station decides on a per CAN message basis if that message should be converted and processed locally or not.

Header verification is typically done in software, and there are potentially many layers of headers to check, each with many fields to check (layer numbers below are based on the OSI 7 layer model). For example layers 2, 3, 4, and 7 may need to be checked as follows:
Layer 2
   Destination Address
   Source Address
   Is the frame S-Tagged and/or C-Tagged and is the tag's contents (*i.e*., PCP, Priority Code Point; DEI, Discard Eligible Indicator; & VID, VLAN Identifier) as expected?
Layer 3
   Is the frame IPv4, IPv6 or a layer 3 protocol such as IEEE 1722?
   Are the fields in the header correct (*e.g*., checksums) or as expected (Protocol, Source IP Address, Destination IP Address, *etc*.)?
Layer 4
   Is the frame TCP or UDP?
   Are the fields in the header correct (*e.g*., checksums) or as expected (Source Port, Destination Port, *etc*.)?
Layer 7
   Is the application header correct or as expected (application specific)?

As these examples show, there are a lot of Ethernet header bits that need to be verified. Accelerating this even if a processor is still used in a system, frees up that processor to perform so many other tasks. In a processor-less end station, the target use case, checking some, if not all these bits are likely required for the target application. Currently, software is typically used and takes a lot of processor cycles, especially if an IEEE 1722 frame is received containing multiple messages. In this case, verification on a per message basis takes multiples times the number of processor cycles needed for verification as each message needs to be independently verified. Deep packet inspection of the headers may be done but this approach is generally not keyed off the application data (*e.g*., the message identifier in the example), and deep packet inspection cannot be run multiple times per Ethernet frame (for frames that contain multiple messages).

CAN to/from Ethernet using IPv4 User Datagram Protocol (UDP) will be used as an example to describe embodiments of the interface system. When hardware or software is used to build an Ethernet frame from a CAN message all the Ethernet header bits need to be determined as they do not exist in the source CAN message. Some structure is needed that defines the desired header bits based on some content that is in the source message. For CAN, its message identifier is a good piece of information (*i.e*., a Key) to use to determine what the needed Ethernet frame values should be as the message header is unique per message. In an alternative embodiment, other fields may be used as well. The Key is used to access a database that contains the Actions that need to be performed to build the desired Ethernet frame.

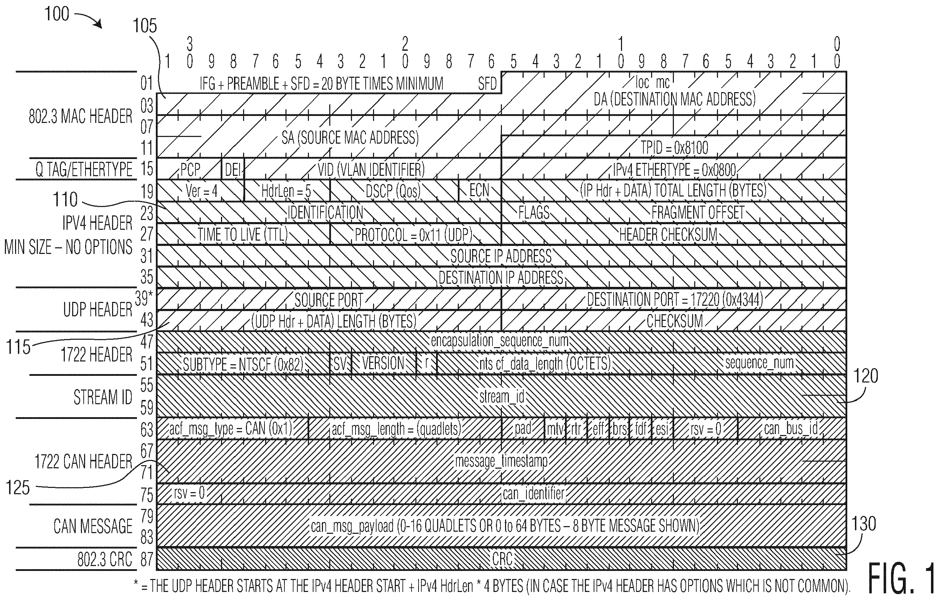

FIG. 1 illustrates an example of an IPv4 UDP Frame with a CAN message where the various headers are illustrated with different shadings along with the embedded CAN message. The fields 125 near the bottom is the input CAN message with line 75 containing a possible Key, that is, the can_identifier. The rest of the Ethernet frame's contents need to come from the actions database described above. This includes the fields 105 (Layer 2 802.3 MAC header & 802.1 Tags), the fields 110 (Layer 3 IPv4 in this example), the fields 115 (Layer 4, UDP in this case), and the fields 120 which are the IEEE 1722 header. As mentioned above, the fields 125 are the application message that is CAN in this case.

IEEE 1722 allows multiple sets of fields 125 back-to-back in a single Ethernet frame (i.e., multiple CAN messages in a single Ethernet frame). Each of these messages need to have some or all the frame's header fields verified (or re-verified) before it sends the CAN message that is being processed out its CAN bus.

Some of the fields do not need to come from the Action database as they are computed. These include the CRC filed 130 (line 87), the UDP Checksum (line 43), the IPv4 Header Checksum (line 27) to name a few. What is important is that there is some hardware mechanism to build a complete Ethernet frame with meaningful content based on the input data that was received (the CAN message in this case).

Because this CAN to Ethernet mechanism exists, the embodiments described herein reuses the same database for the reverse Ethernet to CAN message protocol conversion to perform header verification. No new mechanism nor database is needed to support this Ethernet to CAN message protocol conversion. No other filtering (like the DA) is needed as well, and other filtering may be removed, as that is part of the CAN to Ethernet verification mechanism.

The minimal added hardware that is needed for verification includes a few Actions bits used to indicate which header fields need to be verified and what the expected format of the frame needs to be, else the current message (CAN in the example) is dropped (*i.e.,* no further action is taken on that message and processing continues with the next messages, if one exists). Additional lines are needed to route the needed Action bits to the Ethernet to CAN block as well as flip-flops for storage and comparators for verification. The potentially large database does not need to be replicated.

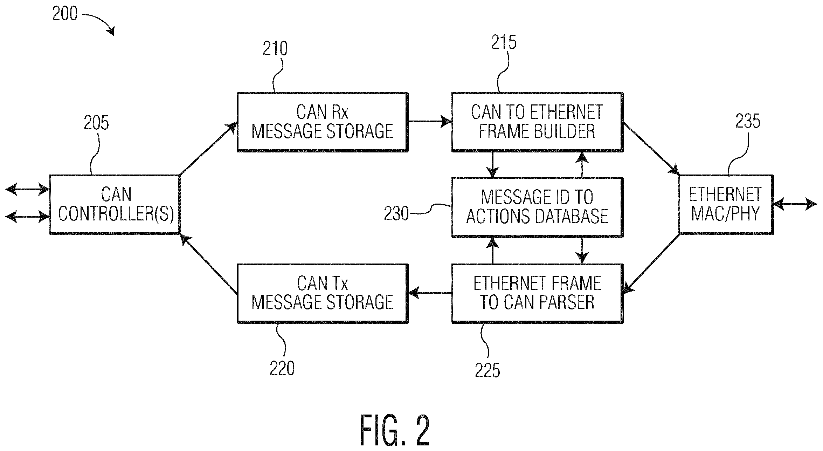

FIG. 2 illustrates an interface system that converts messages between CAN and Ethernet. The interface system 200 includes CAN controller(s) 205, CAN Rx message storage 210, CAN to Ethernet frame builder 215, CAN Tx message storage 220, Ethernet to CAN parser 225, message ID to action database 230, and Ethernet MAC/PHY 235.

The CAN controller(s) 205 may be typical CAN controllers used to interface to a CAN in order to receive and transmit messages on the CAN bus(es). The CAN controller(s) 205 may receive CAN messages intended for other systems in the vehicle and transfer them to the CAN Rx message storage 210. The CAN Rx message storage 210 receives and stores outgoing CAN messages to be transmitted over Ethernet. These CAN messages may then be read by the CAN to Ethernet frame builder 215. The CAN controller(s) 205 may receive CAN messages from other systems in the vehicle from the CAN Tx message storage 220. The CAN Tx message storage 220 receives CAN messages from the Ethernet frame to CAN parser 225 and stores them. The CAN controller(s) 205 can then read the received CAN messages from the CAN Tx message storage 220 and send them out the CAN bus.

The CAN to Ethernet frame builder 215 reads CAN messages to be transmitted over Ethernet from the CAN Rx message storage 210. The read CAN message then needs to be built into an Ethernet frame. It is noted that one or more CAN messages may be built into an Ethernet frame. The CAN to Ethernet frame builder 215 extracts the CAN identifier and uses this as a key into the message ID to actions database. In other embodiments, other information may be used as the key instead of or along with the CAN identifier. The message ID to action database 230 provides the information and instructions to the CAN to Ethernet frame builder 215. The CAN to Ethernet frame builder 215 then creates the Ethernet frame including the CAN message based upon the information and instructions received. Once the CAN to Ethernet frame builder 215 creates the Ethernet frame, the Ethernet frame is sent to the Ethernet MAC/PHY 235. The Ethernet MAC/PHY 235 is the physical interface to the Ethernet network, and the Ethernet MAC/PHY 235 transmits the received Ethernet frame onto the Ethernet network.

As described above, the existence of the message ID to actions database 230 may be leveraged to assist in filtering CAN messages received from the Ethernet network via the Ethernet MAC/PHY 23 5. The Ethernet frame to CAN parser 225 receives ethernet messages from the Ethernet MAC/PHY 235. The Ethernet frame to CAN parser 225 extracts the CAN identifier from the CAN message (if any) received by the Ethernet MAC/PHY 235. If there is more than one CAN message, then multiple CAN identifiers are extracted and each CAN message is processed. The Ethernet from to CAN parser 225 accesses the message ID to actions database 230 to retrieve the information and actions that were used to build the CAN message associated with the CAN identifier. Also Action bits associated with the CAN identifier are read from the message ID to actions database. Each of the Action bits are associated with a specific field or other check of the message and its value indicates whether the specific test is part of the verification check of the received message. In the example implementation, the following Action bits are added for verification:
31: Layer 2: Does the frame's Destination Address (DA[47:0]) bits must match the expected value?
30: Layer 2: Does the frame's Source Address (SA[47:0]) bits must match the expected value?
29: Layer 2: Does the frame contain or not contain an S-Tag as expected?
28: Layer 2: Does the frame contain or not contain a C-Tag as expected?
27: Layer 2: Does the frame contain or not contain an R-Tag as expected?
26: Reserved
25: Layer 3: Does the frame match the expected Ethertype (*e.g*., IEEE 1722, IPv4 or IPv6)?
24: Layer 3: If frame is IP does its IPv4 DSCP or IPv6 Traffic Class bits match as expected?
23: Layer 3: If frame is IP does its IPv4 Identifier or IPv6 Flow Label match as expected?
22: Layer 3: If frame is IP does its IPv4 or IPv6 SIP match as expected?
21: Layer 3: If frame is IP does its IPv4 or IPv6 DIP match as expected?
20: Layer 4: If frame is UPD does its Source Port match as expected?
19: Application: Is the IEEE 1722 subtype as expected?
18: Application: Is the IEEE 1722 sequence_num as expected?
17: Application: Is the IEEE 1722 stream_id as expected?
16 to 0: Reserved

So for example if any of bits 17 to 31 are set to a value of 1, then that test is part of determining if the received message should be accepted and sent out on the CAN. Therefore, the Ethernet frame to CAN Parser 225 would include hardware logic to test for each of the conditions associated with bits 17 to 31 to produce associated validity bits. Then additional logic would be used to combine the validity bits indicated by the Action bits to determine whether the message is valid.

This is just an example list of potential Action bits, but they show the large number of bits that can be compared in hardware in one or a few clock cycles. Because all of the comparisons and combinations of the validity bits based upon the Activity bits are implemented in hardware logic, this verification approach saves die area (by reusing the database), is faster (can be done in one or a few clocks), and saves power because slower clocks may be used (20 MHz vs. 200 MHz to 2+ GHz).

It is noted that if the Ethernet frame has more than one CAN message, each of the messages may be quickly processed by the Ethernet Frame to CAN parser 225.

When the Ethernet frame to CAN parser verifies a CAN message received in the Ethernet frame, it is stored in the CAN Tx Message storage 220. The CAN controller(s) 205 can then read the verified CAN message out of the CAN Tx message storage and transmit it on the CAN.

It is noted that each of the elements of the interface system 200 will be implemented in hardware logic. The CAN Rx message storage 210 and CAN Tx message storage 220 may be implemented using any type of memory. They may be separate memories or sections of a single memory. The message ID to Actions database may include a content accessible memory (CAM) or ternary CAM (TCAM). The CAN to Ethernet frame builder 215 and Ethernet frame to CAN parser 225 will be implemented in hardware based upon the logic functions needed to build an Ethernet frame out of a CAN message(s). This may be done by defining the logical functionality of the CAN to Ethernet frame builder 215 and then using design tools to layout a logic circuit that can be built to implement the defined functionality. Likewise, the Ethernet frame to CAN parser 225 will be implemented in hardware based upon the logic functions needed to carry out the verification operations needed to verify the received Ethernet message. This may be done by defining the logical functionality of the Ethernet frame to CAN parser 225 and then using design tools to layout a logic circuit that can be built to implement the defined functionality.

As previously mentioned, a specific embodiment of a interface system/circuit has been described using a CAN and Ethernet network. The described interface system/circuit may also be applied to other types of networks that need to interface with one another.

It should be appreciated by those skilled in the art that any block diagrams herein represent conceptual views of illustrative circuitry embodying the principles of the invention.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be affected while remaining within the scope of the invention. Accordingly, the foregoing disclosure, description, and figures are for illustrative purposes only and do not in any way limit the invention, which is defined only by the claims.

## Claims

1. An interface system for interfacing between a first network using a first protocol and a second network using a second protocol, comprising:
a hardware implemented message identifier to actions database configured to store action bits and store information and actions regarding building a frame in the second protocol based upon a message identifier in a first message in the first protocol, wherein the message identifier to actions database includes information and actions used to build out a message in second protocol containing the first message and wherein the action bits the action bits indicate what comparisons will be used to verify the validity of a message received from the second network;
a hardware implemented frame builder configured to produce a second message in the second protocol including the first message based upon the information and actions from the message identifier to actions database; and
a hardware implemented parser configured to:
receive a third message from the second network in the second protocol;
extract the message identifier from a fourth message in the first protocol included in the third message from the second network;
receive action bits, information, and actions from the message identifier to actions database associated with the message identifier from the fourth message;
verify the validity of the fourth message based upon the action bits, information, and actions associated with the message identifier from the fourth message;
outputting the fourth message to the first network when the fourth message is valid; and
dropping the fourth message when the fourth message is invalid.

2. The interface system of claim 1, further comprising:
a first message storage configured to store the first message from the first network and to output the first message to the frame builder;
a second message storage configured to store the fourth message output from the parser
a first network interface connected to the first message storage and the second message storage; and
a second network interface connected to the frame builder and the parser.

3. The interface system of any of claims 1 to 2, wherein verifying the validity of the fourth message includes comparing various field values in the third message and the fourth message with an associated value in the information received from the message identifier to actions database using hardware logic.

4. The interface system of any of claims 1 to 3, wherein the action bits indicate which of the various comparisons are used to verify the validity of the third message.

5. The interface system of any of claims 1 to 4, wherein the action bits indicate a comparison to determine whether a destination address and source address in the third message match expected values based upon the information received from the message identifier to actions database.

6. The interface system of any of claims 1 to 5, wherein the second network is an Ethernet network and wherein the action bits indicate a comparison to determine whether one of an S-Tag, a C-Tag, or an R-Tag in the third message match expected values based upon the information received from the message identifier to actions database.

7. The interface system of any of claims 1 to 6, wherein the first network is one of a controller area network (CAN) or a local interconnect network (LIN).

8. The interface system of any of claims 1 to 5 and 7, wherein the second network is an Ethernet network.

9. An method for interfacing between a first network using a first protocol and a second network using a second protocol, comprising:
receiving a first message in the first protocol;
extracting a message identifier from the first message;
querying a message identifier to actions database using the extracted message identifier from the first message, wherein the message identifier to actions database includes information and actions used to build out a message in second protocol containing the first message;
receiving information and actions from message identifier to action database circuit; and
producing a second message in the second protocol including the first message based upon the received information and actions;
receiving a third message from the second network in the second protocol;
extracting the message identifier from a fourth message in the first protocol included in the third message from the second network;
querying the message identifier to actions database using the extracted message identifier from the fourth message;
receiving action bits, information, and actions from the message identifier to actions database associated with the message identifier from the fourth message, wherein the action bits indicate what comparisons will be used to verify the validity of the fourth message;
verifying the validity of the fourth message based upon the action bits, information, and actions associated with the message identifier from the fourth message;
outputting the fourth message to the first network when the fourth message is valid; and
dropping the fourth message when the fourth message is invalid.

10. The method of claim 9, wherein verifying the validity of the fourth message includes comparing various field values in the third message and the fourth message with an associated value in the information received from the message identifier to actions database circuit.

11. The method of claim 10, wherein the action bits indicate which of the various comparisons are used to verify the validity of the third message.

12. The method of any of claims 10 to 11, wherein the action bits indicate a comparison to determine whether a destination address and source address in the third message match expected values based upon the information received from the message identifier to actions database.

13. The method of any of claims 10 to 12, wherein the second network is an Ethernet network and wherein the action bits indicate a comparison to determine whether one of an S-Tag, a C-Tag, or an R-Tag in the third message match expected values based upon the information received from the message identifier to actions database.

14. The method of any of claims 9 to 13, wherein the first network is one of a controller area network (CAN) or a local interconnect network (LIN).

15. The method of any of claims 9 to 12 and 14, wherein the second network is an Ethernet network.
